# EUROPEAN PATENT SPECIFICATION

(11) **EP 1 238 218 B1**
(45) Date of publication and mention of the grant of the patent: **11.10.2006**
(21) Application number: 00976450.7
(22) Date of filing: 16.11.2000
(51) Int. Cl.: F16K 3/32, F23L 3/00, F24F 13/16

(54) **ADJUSTMENT BODY**
REGULIERUNGSKÖRPER
ELEMENT REGULATEUR

(30) Priority: 17.11.1999 NO 995647
(43) Date of publication of application: 11.09.2002
(73) Proprietor: Ingebretsen, Ove, 1472 Fjellhamar (NO)
(72) Inventor: Ingebretsen, Ove, 1472 Fjellhamar (NO)
(74) Representative: Weise, Reinhard
(86) International application number: PCT/NO2000/000387
(87) International publication number: WO 2001/036849

(56) References cited:
- WO-A1-88/10403
- WO-A1-99/37944
- CH-A- 314 254
- US-A- 3 223 019
- US-A- 5 218 998
- US-A- 5 427 146

## Description

The present invention relates to an adjustment body mounted in connection with a fluid flow for substantially linear adjustment of a through-flowing fluid volume as a result of a corresponding linear movement in the adjustment body. The invention relates especially to an adjustment body for mounting in an air flow in a ventilation system where the achievement of a linear relationship between adjusted fluid volume and movement in the adjustment body is particularly advantageous. The invention further essentially relates to the profile of the through-flow aperture(s) in the adjustment body and how the profile of the aperture or apertures is formed in order to achieve a linear relationship between adjusted fluid volume and the movement of the through-flow adjusting parts of the adjustment body.

An adjustment body or damper for linear adjustment of a fluid flow is essentially designed in such a manner that the fluid through-flow is linear and approximately proportional to the damper's or the adjustment body's degree of opening. The object of such a damper with linear adjustment characteristics is, amongst other things, to facilitate the use of linear adjustment strategy and adjustment technology in order to adjust fluid through-flow in a fluid line. This kind of adjustment and calculation of air volumes, pressure and necessary changes in a fluid line system is considerably simplified if linear adjustment bodies can be employed since this means that use can also be made of linear-based adjustment methodology which is not complicated by the characteristics of non-linear adjustment bodies.

Under certain conditions typical non-linear adjustment bodies can provide major changes in fluid through-flow with a very small movement or alteration of the adjustment body, while under certain other conditions non-linear adjustment bodies can provide very small alterations in adjusted fluid volume even with major alterations in the position and opening of the adjustment body. The characteristic of each individual non-linear adjustment body therefore has to be known so that it can be taken into consideration when adjusting the fluid flow. If the adjustment body is designed in such a manner that a linear characteristic is obtained in the relationship between fluid volume passed and degree of opening, it will be easier to use the damper in a standard adjustment system where traditional elements with regard to sensors, adjustment and programming can be employed. This in turn contributes to lower costs when employing a linear adjustment body/damper in an adjusted system, while at the same time offering the possibility of obtaining a more accurate adjustment of the fluid flow. When installing a fluid flow system, such as a ventilation system, the reduction in costs in connection with the use of linear adjustment bodies is reflected in the ability to make greater use of standardised adjustment elements, while lower costs are achieved in connection with start-up and subsequent operation of the adjustment system. Furthermore linear adjustment bodies provide simpler control with regard to variable air volume and to some extent simpler control with regard to pressure changes, which will also result in a lower energy consumption by means of an almost optimal control of the ventilation system. In particular, the situation regarding automatic adjustment will be substantially simplified if adjustment bodies or dampers with linear or approximately linear characteristics are employed, since this enables the same adjustment device or automation to be employed in several adjustment bodies independently of characteristics, in contrast to the situation with non-linear adjustment bodies, where adjustment mechanisms and automation have to be adapted to the adjustment bodies' non-linear characteristics.

Thus it is the object of the present invention to provide an adjustment body or damper with a profiled shape of the aperture or apertures which provides through-flow in the adjustment body, which apertures by means of their shape produce a linear adjustment relationship between degree of opening and fluid volume through-flow. The adjustment body or damper should preferably be formed so as to provide good flow-related conditions, low pressure resistance, a low noise level and simple design in order thereby to facilitate the alteration of the adjustment body's or the damper's through-flow area.

The adjustment body according to the present invention consists essentially of a profile plate with one or more profiled apertures and an adjustment plate with one or more apertures, which profile plate and adjustment plate are movable relative to each other, the apertures in the profile plate and the adjustment plate thus forming a resulting aperture for through-flow of fluid, which resulting aperture provides a linear relationship between the degree of displacement between the profile plate and the adjustment plate and the fluid volume through-flow. The adjustment plate and the profile plate in this case may have one or more apertures and do not necessarily need to have the same number of apertures. The adjustment plate has essentially one or more easily manufactured apertures, for example rectangular apertures or the like. The profile plate has one or more profiled apertures and it is an object of the present invention to provide a profile for the aperture(s) in the profile plate which produces the linear relationship between the fluid volume through-flow and the degree of displacement between profile and adjustment plate respectively. The relationship between the aperture(s) in the profile plate the adjustment plate respectively is thereby such that the height of the aperture(s) in each of the plates should be the same. If the aperture in the adjustment plate (with, for example, rectangular apertures) has a height which is greater than the height of the profiled aperture in the profile plate when there is a full fluid through-flow aperture, i.e. the profiled aperture and the rectangular aperture completely cover each other, a further displacement of the profiled aperture could occur without producing a corresponding alteration in the fluid volume through-flow. This will result in a lack of linearity in the relationship between the fluid volume through-flow and displacement of the profiled aperture relative to the aperture in the adjustment plate. If, on the contrary, the height of the aperture in the adjustment plate is less than the height of the profiled aperture in the profile plate, one end of the profile aperture will be blocked before the whole of profiled aperture overlaps the aperture in the adjustment plate, which could restrict the through-flow of fluid and create a non-linear relationship when the through-flow rate is high. Thus the height of the aperture in the profile plate and the aperture in the adjustment plate should be substantially the same.

Of previously known solutions which are designed to achieve the same objects as the present invention, we refer in particular to international patent application PCT/N099/00019 belonging to the applicant, in which a similar adjustment body is described with two plates which are moved relative to each other. The aperture in the profile plate, however, is substantially triangular and it has been shown that with a triangular shape, even with an enlarged, curved, upper portion (idling portion), the through-flow of fluid will only be approximately linear, i.e. it will not have an essential linearity, even though the solution which is described in the said PCT application provides a relationship which is substantially closer to linear than traditional technical solutions. Furthermore, in Norwegian patent 166462 and US patent 5218998 together with US patent 5427146 and US patent 3223019 related technical solutions are described for achieving linear adjustment of a fluid flow or technical solutions comprising two plates with apertures which are moved relative to each other in a fluid flow.

According to the present invention a profiled aperture is produced in the profile plate, which aperture is composed of a number of successive aperture segments in the profiled aperture's longitudinal direction (height), which segments all have the same height. The segments together form the total profiled aperture in the profile plate and the area of each segment corresponds to the aperture which is necessary in order to admit a fluid volume which provides a linear relationship between the degree of total opening and through-flowing fluid volume.

Thus the area of each segment must provide a further fluid through-flow which in the linear relationship corresponds to the height change represented by each segment related to the total height of the aperture. In view of the fact that the height of the segments is the same for all the segments, the width of the segments will have to be changed in order to obtain different areas in each segment. The area required will vary from segment to segment, and if the aperture in the profiled plate is divided into a sufficiently large number of segments, relatively smooth transitions will be obtained between the different segments by relatively small alterations in the width of the segments. If the number of segments is low, this will entail relatively large width alterations between different successive segments and the total profiled aperture should therefore be divided into a number of segments which provide a limited maximum width variation between two successive segments. If the width variation between successive segments is too great, this could produce partially turbulent flows as well as causing an undesirable pressure drop and possibly noise. The segments, moreover, may be provided with sloping, curved or profiled lateral edges as an alternative to straight edges in order to adapt the shape of successive segments to one another and thus obtain a smoother transition between successive segments of different widths. If the height of the first segment forms a relatively large part of the total aperture height, the upper longitudinal side of the upper segment should be profiled with a curved shape or sloping shape along its top.

Experiments have shown that a profiled aperture which provides a linear relationship between the degree of displacement between profile plate and adjustment plate and fluid volume through-flow can be achieved by designing the profiled aperture in the form of a "mushroom" with a cap and stalk where the stalk is fairly wide relative to the width of the cap and where in addition the stalk's lateral edges are wave-shaped. The mushroom's head or cap forms the area which allows the first part of the fluid flow to pass through. The profiled aperture is therefore given a relatively large area in the first part of the aperture which is exposed to the fluid flow (the mushroom's head/cap) and the width of each segment will gradually be reduced in order to provide a linear adjustment relative to the displacement of the profiled plate relative to the adjustment plate. Next come the segments representing the mushroom's stalk and the area and thereby the width of these segments will also vary. Experimental data have also shown that if the width variation between the successive segments in the mushroom's stalk give the stalk substantially wave-shaped lateral edges, the total aperture will provide an approximately linear relationship between the through-flow volume and the degree of exposed total through-flow aperture.

An adjustment body according to the present invention is indicated in the introduction to the following independent claim 1 with characterising constructive features as indicated in the characterising part of claim 1. Further embodiments of the adjustment body are indicated in the following dependent claims.

The invention is further described with reference to the attached figures, in which:
fig. 1 is a perspective view of an embodiment of the adjustment body according to the present invention;
fig. 2 illustrates a preferred embodiment of the design of the profiled aperture according to the present invention;
fig. 3 illustrates in diagrammatic form the result of experiments conducted with an adjustment body as illustrated in fig. 1 with a profiled aperture as illustrated in fig. 2.

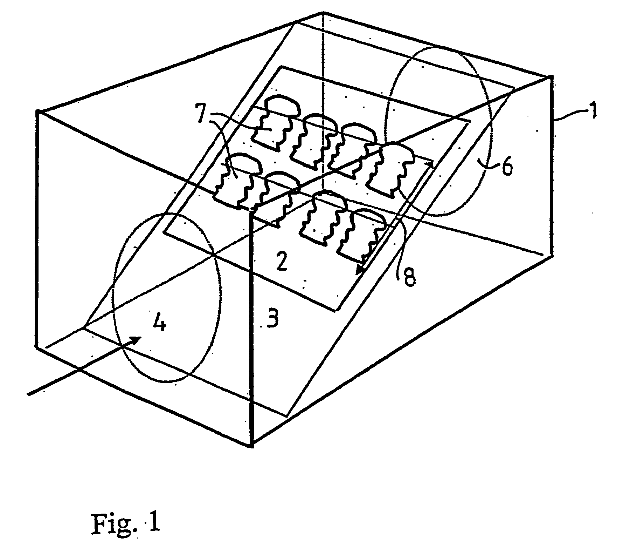

Fig. 1 illustrates an embodiment of an adjustment body according to the present invention, which adjustment body comprises a housing 1 which is connected to a fluid flow, which fluid flow is guided into the aperture 4 in the direction of the arrow, passes through the apertures 7 and on out of the housing's aperture 6. Alternatively, the fluid flow may be reversed, passing in through the aperture 6, on through the apertures 7 and out through the aperture 4. In the housing 1 a plate 3 provided with one or more apertures is mounted in the fluid flow. A plate 2 with profiled apertures 7 is movably mounted relative to the plate 3. The profile plate 2 can be moved as illustrated by the arrow 8 in such a manner that the profiled apertures 7 more or less overlap the apertures in the adjustment plate 3. If the profiled apertures 7 in the profile plate 2 do not either entirely or partly overlap the apertures in the adjustment plate 3, the adjustment body is closed for through-flow of fluid.

According to the object of the present invention the profiled plate 2 can be moved in the arrow's 8 directions, with the result that the profiled apertures 7 are moved relative to the apertures in the adjustment plate 3. According to the object of the invention this will provide a linear relationship between the degree of movement between the plate 2 and the plate 3 and the through-flow fluid volume. For example, a 30% movement of the plates 2 and 3 relative to each other will result in a 30% fluid through-flow (volume). In alternative embodiments the profiled apertures may be arranged in the stationary adjustment plate 3 and the plate 2 which is movably mounted relative to the plate 3 may further be provided with, for example, rectangular apertures. The height of the apertures in each of the plates is preferably the same.

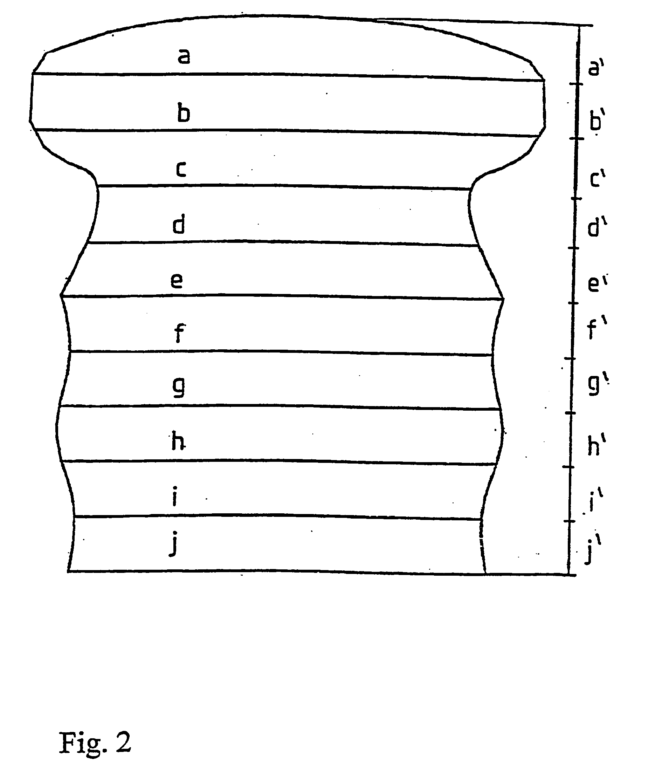

The linear adjustment of the fluid volume through-flow relative to the degree of opening is further provided through the design of the profiled aperture(s) in the adjustment plate 3 or the profile plate 2. A preferred embodiment of the profiled aperture is further illustrated in fig. 2 and according to the present invention is divided into segments a - j over its entire height, which segments have the same height or length in the longitudinal direction, a' - j'. According to the present invention the segments' height a' - j' should be equal, with the result that the linear adjustment is undertaken by adjusting the through-flow aperture with an alteration corresponding to the height of the adjacent segment. If the through-flow aperture has to be reduced, the profile plate is moved in such a manner that the total aperture is reduced by the area of the adjacent segment and if the through-flow aperture has to be increased, the profile plate is correspondingly moved in such a manner that the total aperture is increased by the area of the adjacent segment. The area of each segment therefore has to be adapted in such a manner that the through-flow aperture for the fluid flow is altered linearly by the added or subtracted area relative to the displacement corresponding to the segment's height.

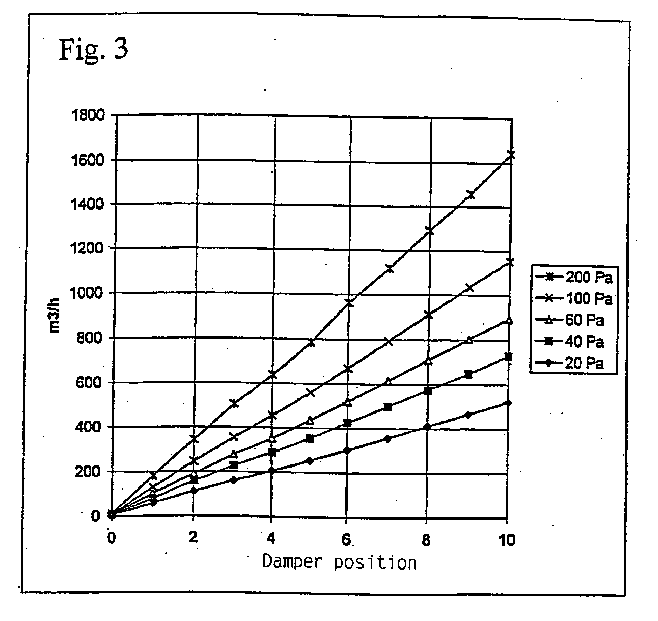

According to the present invention it has been shown that a preferred embodiment of a profiled aperture has a shape substantially as indicated in fig. 2 with a mushroom-like shape with a broad stalk. The mushroom's cap will be the first aperture which is exposed to the fluid flow and the mushroom's stalk has wave-shaped lateral edges with the result that the area of each successive segment will vary approximately as indicated in fig. 2. The transition between the wave shapes may, for example, be pointed like the transition between the segments e and f or it can be curved like the transition between the segments g and h. The first segment which is exposed when the plates 2 and 3 are moved relative to each other after the closed position is segment a with height a'. When segment b is subsequently exposed the area of segment b corresponds to the area which requires to be increased relative to the height b' of the segment b in order to achieve a linear relationship between displacement a' + b' and fluid volume through-flow. The increasing area in the first part of the profiled aperture, which in fig. 2 is represented particularly by segment b is necessary in order to lift the first measuring point along the Y-axis in fig. 3 and subsequently the area has to be reduced in the segments c and d in order to obtain a linear relationship between the measuring points. In alternative embodiments, therefore, it will be possible to divide the profiled aperture in the profile plate into a greater number of segments than that illustrated in fig. 2, which also enables the segments to have a substantially rectangular shape. The segments illustrated in fig. 2 have sloping or rounded lateral edges which provide smooth transitions between successive segments.

In the preferred embodiment the height of the cap in the mushroom shape constitutes approximately 1/3 of the profile's height and in most embodiments the height of the cap will constitute between 20% and 40% of the profile's total height. In relation to the average area of the segments the wave shape in the mushroom's stalk in the preferred embodiment will substantially constitute an area variation of between -20% and +10%. In alternative embodiments the area of the segments in the mushroom's cap will be up to 35% larger than the average area of the segments and in the preferred embodiment will be approximately 25% larger than the average area. In view of the fact that the height of each segment is equal, the numbers can represent the variation in width of the segments.

Fig. 3 illustrates in diagrammatic form the linear adjustment of through-flow which is achieved with an adjustment body as illustrated in fig. 1 where one or more profiled apertures are employed as indicated in fig. 2. The series of measurements are conducted at different pressures and the damper positions along the X-axis reflect the exposure of the segments a - j where the height increment is determined by the height of each segment a' - j'. In fig. 3 the fluid volume through-flow is indicated along the vertical Y-axis for each damper position. One of the requirements for a linear relationship between degree of opening and through-flow is that the pressure is constant in front of the adjustment body at each measuring point on the linear curve. A pressure ratio which deviates from constant pressure will naturally influence the linear adjustment but a substantially linear adjustment will still be achieved. An adjustment body according to the present invention can therefore be suitable for use in a system which is adjusted statically and where stable, constant pressure ratios are set. If the adjustment body is employed for dynamic adjustment it may be necessary to employ a pressure adjustment means which provides constant pressure in front of the adjustment body each time the through-flow aperture is altered.

If more than one aperture is used in the profile plate, for example as illustrated in fig. 1 by the apertures 7 in the plate 2, each aperture may have a profiled shape approximately as indicated in fig. 2, according to the present invention.

In the above a profiled aperture has been described in the form of a preferred embodiment and the form of the apertures may, of course, be altered in order to obtain other linear characteristics in an adjustment body. The basic shape of the profiled apertures will nevertheless be substantially as indicated in the present description with room for adjustments and modifications according to what a person skilled in the art can expect to accomplish based on the need for adaptations to the prevailing situations. These modifications and adaptations will therefore also fall within the inventive concept, as indicated in the following claims.

## Claims

1. Adjustment body for substantially linear adjustment of throughflowing fluid volume in a fluid flow as a result of a linear adjustment movement in the adjustment body, which adjustment body consists substantially of / two plates mounted in parallel in the fluid flow, where one of the plates (3) is provided with a number of apertures and the other plate (2) is provided with a number of profiled apertures (7), which plates (2,3) are movable relative to each other in such a way that the apertures in the plates overlap one another, forming a common aperture for fluid through-flow, **characterized in that** each of the profiled apertures (7) in one of the plates (2,3) is composed of a number of successive segments (a-j) in the aperture's height, which segments (a-j) are each of equal height (a'-j') and which segments (a-j) each have an aperture area corresponding to the required additional fluid through-flow related to the height change (a'-j') of the total aperture which is composed of the segment's (a-j) height in order to produce a linear relationship between the through-flow fluid volume in the total aperture and the height of the total overlapping aperture between the two said plates and **in that** each profiled aperture (7) is mushroom-shaped with a cap and stalk where the width of the stalk is relatively great compared to the width of the cap and the stalk's lateral edges are wave-shaped in the aperture's longitudinal direction.

2. Adjustment body according to claim 1, **characterized in that** each mushroom's cap is the first to be exposed when an overlapping through-flow aperture is formed between the aperture(s) in the two plates (2,3).

3. Adjustment body according to claims 1 or 2, **characterized in that** each mushroom shape's cap constitutes between 20% and 40% of each profiled aperture's total height.

4. Adjustment body according to claims 1 or 2, **characterized in that** each mushroom shape's cap constitutes approximately 1/3 of each profiled aperture's total height.

5. Adjustment body according to any of the preceding claims, **characterized in that** the area of the segments in the "stalk" in each profiled aperture varies substantially between -20% and +10% in relation to the average area of the segments and provides wave-shaped lateral edges.

6. Adjustment body according to any of the preceding claims, **characterized in that** the area of the segments in each mushroom's cap is up to 35% larger than the average area of the segments.

7. Adjustment body according to any of the preceding claims, **characterized in that** each mushroom's stalk has wave-shaped lateral edges with pointed wave tops.

8. Adjustment body according to any of claims 1-6, **characterized in that** each mushroom's stalk has wave-shaped lateral edges with rounded wave tops.

9. Adjustment body according to any of the preceding claims, **characterized in that** one or more of the segments (a-j) have straight lateral edges.

10. Adjustment body according to any of claims 1-8, **characterized in that** one or more of the segments (a-j) have sloping lateral edges.

11. Adjustment body according to any of claims 1-8, **characterized in that** one or more of the segments (a-j) have curved lateral edges.

## Patentansprüche

1. Regulierungskörper zur im Wesentlichen linearen Regulierung des Durchflussvolumens eines Fluids in einem Fluidstrom als Folge einer linearen Regulierungsbewegung in dem Regulierungskörper, der im Wesentlichen aus zwei Platten besteht, die parallel in dem Fluidstrom angebracht sind, wobei eine der Platten (3) mit einer Anzahl von Öffnungen ausgestattet ist und die andere Platte (2) mit einer Anzahl von profilierten Öffnungen ausgestattet ist, wobei die Platten (2, 3) relativ zueinander in einer solchen Weise bewegbar sind, dass die Öffnungen in den Platten einander überlappen, wobei sie eine gemeinsame Öffnung für den durchtretenden Fluidstrom bilden,
**dadurch gekennzeichnet,**
**dass** jede der profilierten Öffnungen (7) in einer der Platten (2, 3) aus einer Anzahl von in der Höhe der Öffnung aufeinander folgenden Segmenten (a-j) besteht, wobei diese Segmente (a-j) jeweils die gleiche Höhe (a'-j') aufweisen und diese Segmente (a-j) jeweils eine Öffnungsfläche aufweisen, die dem benötigten, zusätzlichen, durchtretenden Fluidstrom bezogen auf die Änderung der Höhe (a'-j') der gesamten Öffnung entspricht, die aus der Höhe des Segments (a-j) besteht, um eine lineare Beziehung zwischen dem Durchflussvolumen des Fluids in der gesamten Öffnung und der Höhe der gesamten überlappenden Öffnung zwischen den beiden Platten zu schaffen, und
**dass** jede profilierte Öffnung (7) pilzförmig mit einer Kappe und einem Stiel ausgestaltet ist, wobei die Breite des Stiels im Vergleich zu der Breite der Kappe verhältnismäßig groß ist und die Seitenränder des Stiels in der Längsrichtung der Öffnung wellenförmig ausgestaltet sind.

2. Regulierungskörper nach Anspruch 1, **dadurch gekennzeichnet, dass** die Kappe jedes Pilzes zuerst freizulegen ist, wenn eine überlappende Durchströmungsöffnung zwischen der Öffnung bzw. den Öffnungen in den beiden Platten (2, 3) gebildet wird.

3. Regulierungskörper nach Anspruch 1, **dadurch gekennzeichnet, dass** jede Kappe der Pilzgestalt 20% bis 40% der gesamten Höhe jeder profilierten Öffnung misst.

4. Regulierungskörper nach Anspruch 1 oder 2, **dadurch gekennzeichnet, dass** jede Kappe der Pilzgestalt etwa 1/3 der gesamten Höhe jeder profilierten Öffnung misst.

5. Regulierungskörper nach einem der vorhergehenden Ansprüche, **dadurch gekennzeichnet, dass** die Fläche der Segmente in dem "Stiel" in jeder profilierten Öffnung im Wesentlichen zwischen -20% und +10% mit Bezug auf die durchschnittliche Fläche der Segmente variiert und wellenförmig gestaltete Seitenränder aufweist.

6. Regulierungskörper nach einem der vorhergehenden Ansprüche, **dadurch gekennzeichnet, dass** die Fläche der Segmente in jeder Pilzkappe um bis zu 35% größer ist als die durchschnittliche Fläche der Segmente.

7. Regulierungskörper nach einem der vorhergehenden Ansprüche, **dadurch gekennzeichnet, dass** jeder Pilzstiel wellenförmige Seitenränder mit zugespitzten Wellengipfeln aufweist.

8. Regulierungskörper nach einem der Ansprüche 1-6, **dadurch gekennzeichnet, dass** jeder Pilzstiel wellenförmige Seitenränder mit abgerundeten Wellengipfeln aufweist.

9. Regulierungskörper nach einem der vorhergehenden Ansprüche, **dadurch gekennzeichnet, dass** mindestens ein Segment (a-j) geradlinige Seitenränder aufweist.

10. Regulierungskörper nach einem der Ansprüche 1-8, **dadurch gekennzeichnet, dass** mindestens ein Segment (a-j) geneigte Seitenränder aufweist.

11. Regulierungskörper nach einem der Ansprüche 1-8, **dadurch gekennzeichnet, dass** mindestens ein Segment (a-j) gebogene Seitenränder aufweist.

## Revendications

1. Élément régulateur pour le réglage essentiellement linéaire d'un volume de fluide s'écoulant dans un flux de fluide en conséquence d'un mouvement de réglage linéaire dans l'élément régulateur, lequel élément régulateur consiste essentiellement en deux plaques montées en parallèle dans le flux de fluide, où l'une des plaques (3) est munie d'un nombre d'ouvertures et l'autre plaque (2) est munie d'un nombre d'ouvertures profilées (7), lesquelles plaques (2, 3) sont mobiles l'une par rapport à l'autre de telle sorte que les ouvertures dans les plaques se chevauchent, formant une ouverture commune pour l'écoulement de fluide,
**caractérisé en ce que** chacune des ouvertures profilées (7) dans l'une des plaques (2, 3) est composée d'un nombre de segments successifs (a-j) dans la hauteur de l'ouverture, lesquels segments (a-j) sont chacun de hauteur égale (a' - j') et lesquels segments (a-j) ont chacun une surface d'ouverture correspondant à l'écoulement de fluide supplémentaire requis par rapport à la modification de hauteur (a'-j') de l'ouverture totale qui est composée de la hauteur des segments (a-j) afin de produire une relation linéaire entre le volume de fluide s'écoulant dans l'ouverture totale et la hauteur de l'ouverture en chevauchement totale entre lesdites deux plaques et **en ce que** chaque ouverture profilée (7) est en forme de champignon avec un bouchon et une âme où la largeur de l'âme est relativement grande par rapport à la largeur du bouchon et les bords latéraux de l'âme sont ondulés dans le sens longitudinal de l'ouverture.

2. Élément régulateur selon la revendication 1, **caractérisé en ce que** chaque bouchon de champignon est le premier à être exposé lorsqu'une ouverture d'écoulement en chevauchement est formée entre la/les ouverture(s) dans les deux plaques (2,3).

3. Élément régulateur selon la revendication 1 ou 2, **caractérisé en ce que** chaque bouchon en forme de champignon constitue entre 20 % et 40 % de la hauteur totale de chaque ouverture profilée.

4. Élément régulateur selon la revendication 1 ou 2, **caractérisé en ce que** chaque bouchon en forme de champignon constitue environ 1/3 de la hauteur totale de chaque ouverture profilée.

5. Élément régulateur selon l'une quelconque des revendications précédentes, **caractérisé en ce que** la surface des segments dans « l'âme » de chaque ouverture profilée varie essentiellement entre -20 % et +10 % par rapport à la surface moyenne des segments et fournit des bords latéraux ondulés.

6. Élément régulateur selon l'une quelconque des revendications précédentes, **caractérisé en ce que** la surface des segments de chaque bouchon de champignon est jusqu'à 35 % plus grande que la surface moyenne des segments.

7. Élément régulateur selon l'une quelconque des revendications précédentes, **caractérisé en ce que** chaque âme de champignon a des bords latéraux ondulés avec des surfaces supérieures ondulées pointues.

8. Élément régulateur selon l'une quelconque des revendications 1 à 6, **caractérisé en ce que** chaque âme de champignon a des bords latéraux ondulés avec des surfaces supérieures ondulées arrondies.

9. Élément régulateur selon l'une quelconque des revendications précédentes, **caractérisé en ce qu'**un ou plusieurs des segments (a-j) a/ont des bords latéraux droits.

10. Élément régulateur selon l'une quelconque des revendications 1 à 8, **caractérisé en ce qu'**un ou plusieurs des segments (a-j) a/ont des bords latéraux inclinés.

11. Élément régulateur selon l'une quelconque des revendications 1 à 8, **caractérisé en ce qu'**un ou plusieurs des segments (a-j) a/ont des bords latéraux incurvés.
